# EUROPEAN PATENT APPLICATION

(11) **EP 2 336 222 A1**
(43) Date of publication of application: **22.06.2011**
(21) Application number: 09179579.9
(22) Date of filing: 17.12.2009
(51) Int. Cl.: C08H 8/00, B01D 53/22

(54) **Process for treating lignocellulosic biomass material**

(71) Applicant: Shell Internationale Research Maatschappij B.V., 2596 HR The Hague (NL)
(72) Inventor: Harmsen, Gerrit Jan, 1031 HW Amsterdam (NL); Van der Heide, Evert, 1031 HW Amsterdam (NL)
(74) Representative: Matthezing, Robert Maarten

(57) **Abstract**

The present invention provides a process for treating lignocellulosic biomass material comprising the steps of: (a) contacting the lignocellulosic biomass material with a cooking liquid comprising formic acid and water, to obtain at least one product stream and an aqueous stream comprising a mixture of formic acid and water; (b) separating water and formic acid from the aqueous stream by evaporation water and formic acid to obtain a gaseous stream comprising water and formic acid; and (c) separating at least part of the water and the formic acid diffusion of the water gaseous stream through a porous partition into a gaseous stream of a sweeping component, to obtain a retained stream comprising enriched formic acid and a stream comprising water and the sweeping component.

## Description

### Field of the invention

The present invention relates to a process for treating lignocellulosic biomass material, including a recovery of formic acid from an aqueous mixture..

### Background of the invention

With the diminishing supply of crude oil, the use of renewable energy sources is becoming increasingly important as a feedstock for production of hydrocarbon compounds. Plant biomass is presently considered as a resource of renewable liquid and gaseous hydrocarbon compounds. One of the most commonly used biomass material is lignocellulosic material, such as for instance, agriculture waste, forest residue, wood chips, straw, chaff, grain, grasses, corn, corn husks, weeds, aquatic plants, or hay. These biomass materials primarily consist of cellulose, hemicellulose, and lignin bound together in a complex gel structure along with small quantities of extractives, pectins, proteins, and ash. The lignocellulosic material needs to be pre-treated to obtain hemicellulose, cellulose and lignin for further processing. Some of the existing pretreatment processes use a mixture of concentrated formic acid and water as a cooking liquid. The formic acid is removed as a diluted aqueous stream from hydrolysed hemicellulose, lignin and a solid cellulose rich residue. WO 99/57364 discloses removal of the free formic acid by counter-current washing with water followed by removal of bound formic acid by hydrolysis at a temperature of 50-95°C for about 1 to 3 hours. In WO 99/10595, a similar procedure is disclosed for removing free and bound formic aid from formic acid cooked biomass. Part of the free formic acid is first removed with water washing and then the bound formic acid is hydrolysed at a temperature in the range of from 50 to 95°C and a reaction time between 0.5 and 4 hours using free formic acid as catalyst. The thus obtained dilute formic acid is not suitable for reuse, and usually discarded, thus adding to the costs of the process and creating additional waste. Separation of formic acid on the other hand usually requires highly energy intensive and thus costly rectification as formic acid and water form an azeotrope and are difficult to separate.

It is therefore evident that while some processes for separation of formic acid and water during the biomass pretreatment are disclosed in the art there is a need for an economically feasible and commercially viable process for the separation of the formic acid from an aqueous mixture in the process.

### SUMMARY OF THE INVENTION

Accordingly, the present invention provides a process for treating lignocellulosic biomass material comprising the steps of: (a) contacting the lignocellulosic biomass material with a cooking liquid comprising formic acid and water, to obtain at least one product stream and an aqueous stream comprising a mixture of formic acid and water; (b) separating water and formic acid from the aqueous stream by evaporation water and formic acid to obtain a gaseous stream comprising water and formic acid; and (c) separating at least part of the water and the formic acid diffusion of the water gaseous stream through a porous partition into a stream of a sweeping component, to obtain a retained stream comprising enriched formic acid and a stream comprising water and the sweeping component.

The formic acid thus obtained is preferably condensed, and recycled to be used in step (a).

### Detailed description

It has now been found that the efficiency of a process of the treatment of lignocellulosic biomass material (hereinafter interchangeably used as biomass) can be improved by the removal of the used formic acid from the water present in the cooking liquid, which is at least in part formed from the biomass, as well as added during the cooking step, by using frictional diffusion instead of e.g. distillation or other energy and capital intensive separation methods. The process steps include (a) contacting the lignocellulosic biomass material with a cooking liquid comprising formic acid, to obtain at least one product stream and an aqueous stream comprising a mixture of formic acid and water; and (b) vaporising formic acid and water from the aqueous stream; and (c) separating the vapour into rectified formic acid and water by diffusion of the water from the vapour through a porous partition into a stream of a sweeping component. The formic acid thus obtained is preferably recycled to step (a).

The pretreatment process of the lignocellulosic biomass material according to the present invention includes cooking the biomass material at a temperature in the range of from 90 to 180°C, preferably of from 100 to 150°C, more preferably of from 105 to 130°C, in the presence of a liquid comprising formic acid and water (hereinafter referred to as cooking liquid). Preferably, the cooking liquid has at least 50% vol organic acid and at least 40% vol formic acid. The organic acid may be any suitable organic acid. Preferably the organic acid content comprises formic acid and acetic acid. Preferably, the cooking liquid comprises in the range of from 40 to 80 vol% formic acid. Preferably, the organic acid content of the cooking liquid comprises in the range of from 8 to 50 vol% acetic acid, more preferred in the range of from 10 to 40 vol% acetic acid, and in the range of from 5 to 35 vol% water, even more preferred in the range of from 10 to 25 vol% water, based on the total volume of cooking liquid.

In step (a), the biomass is contacted with the cooking liquid at a biomass-to-liquid ratio in the range of from 1:3 to 1:50, preferably of from 1:5 to 1:20. Reference herein to the biomass-to-liquid ratio is to the ratio of the volume of biomass to the volume of liquid.

The cooking step may be carried out in any reactor configuration suitable for solid-liquid contact, for example a co-current, counter-current or flow-through configuration. The solid biomass is typically comminuted into pieces or particles of a small size before being contacted with the cooking liquid. Preferably the biomass is comminuted into pieces or particles with an average length of less than 3 cm, more preferably an average length in the range of from 0.5 to 2.5 cm. Any suitable lignocellulose containing solid material may be used as biomass in process according to the present invention. This may include the naturally obtained cellulosic material comprising agriculture waste, forest residue, wood chips, straw, chaff, grain, grasses, corn, corn husks, weeds, aquatic plants, hay and any cellulose containing biological material or material of biological origin, also including municipal waste or waste. The major constituents of lignocellulose include hemicellulose (20-30%), an amorphous polymer of five and six carbon sugars; lignin (5-30%), a highly cross-linked polymer of phenolic compounds; and cellulose (30-40%), a highly crystalline polymer of cellobiose (a glucose dimer). The cellulose, hemicellulose, and lignin are bound together in a complex gel structure along with small quantities of extractives, pectins, proteins, and ash.

In cooking step, at least a part of the hemicellulose is hydrolysed to monomer sugars and removed from the solid biomass. The sugars formed are mainly C5 sugars such as xylose. Further, a part of the lignin which is present in the lignocellulose is dissolved or depolymerised and therewith removed from the solid biomass. After cooking step, typically 30 to 60 wt%, usually 40 to 50 wt%, of the dry content of the solid biomass is dissolved in the spent cooking liquid. Water present in the solid biomass will also end up in the spent cooking liquid. In order to prevent large water built up in the spent cooking liquid, the solid biomass that is contacted with the cooking liquid preferably has a water content of at most 50 wt%, more preferably at most 30 wt%, even more preferably at most 10 wt%. The biomass will be contacted with the cooking liquid for a time period sufficient to achieve hemicellulose hydrolysis and partial delignification, typically in the range of from 0.3 to 10 hours, preferably in the range of from 0.5 to 5 hours. Typically, cooking step is carried out at a pressure in the range of from 1 to 10 bar (a), preferably of from 1 to 3 bar(a). By carrying out the cooking step (a), spent cooking liquid and pre-treated or cooked residue are obtained. The pre-treated solid residue is separated from the spent cooking liquid by any suitable technique known in the art, for example by pressing, filtration or centrifugation. The solid residue is further washed with water to recover the traces of acids. The spent cooking liquid thus obtained comprises dissolved lignin, hydrolysed hemicellulose, acetic acid, formic acid and water. A part of the spent cooking liquid is recycled to the cooking step and a part of it is withdrawn or purged. The withdrawn spent cooking liquid is further washed with a washing liquid to remove the hydrolysed hemicellulose and dissolved lignin and obtain a liquid stream comprising a mixture of water and formic acid.

The formic acid water mixture remaining at the end of this step is preferably processed for the recycling of the formic acid. Formic acid is separated from water in a separation unit by frictional diffusion of water through a porous partition into a stream of a sweeping component. Herein, the difference in the diffusion coefficients of formic acid and water with respect to the sweeping component is the basis of separation.

The separation unit has two chambers separated by the porous partition. In the separation step, the liquid stream comprising formic acid and water is supplied in one of the chambers and the stream of the sweeping component is passed through the second chamber continuously. The porous partition avoids mixing of the formic acid and water stream, and the sweeping component. The porous partition can be made of any porous material known to the skilled person to be suitable for use in a process where it is contacted with the reactants. The porous partition can be made of a porous material that assists in the separation of the components by for example adsorption or absorption effects, provided that the separation by diffusion prevails. Preferably, the material used for the porous partition is inert to the components: formic acid and water, used in the separation process. Materials include for example metal, plastics, sandbeds, zeolites, foams, or combinations thereof may be used for the porous partition. Other materials such as expanded stainless steel, expanded copper, expanded iron; woven metals, e.g. woven copper, woven stainless steel; porous plastics, e.g. porous PP, PE or PS may also be used. Preferred porous material should have a high porosity to maximise the useful surface area.

The thickness of the porous partition is preferably as low as possible. Preferably, a porous partition having a thickness in the range from 0.0001 to 1000 millimetres is used. More preferably in the range from 0.01 to 100 millimetres, and still more preferably in the range from 0.1 to 10 millimetres is used. The length of the porous partition in the direction of the flow of the stream of sweeping component may also vary widely

In operation, equal pressure, preferably atmospheric pressure may be maintained on both the sides of the porous partition. However, it was found that having a slight overpressure on the side of the sweep gas stream increased the separation efficiency. Preferably, this is achieved by a pressure regulating device. The pressure regulating device comprises at least one self-directing pressure and flow regulating device. Such a pressure-responsive device or valve controls the pressure between the two chambers by being actuated solely by pneumatic pressure derived from the liquid stream and the stream of the sweeping component.

Water from the evaporated stream comprising water and formic acid diffuses into the sweeping component through the porous partition thereby separating from formic acid. Water carried by the sweeping component can be advantageously be removed by for example, condensation. This may be performed at any temperature suitable to maintain the formic acid and water in the gas phase.

By a sweeping component is understood a component which is able to sweep away a first component that has diffused through the porous partition. Preferably a component is used which is at least partly gaseous at the temperature and pressure at which the separation process is carried out. More preferably a sweeping component is used which is nearly completely, and preferably completely gaseous at the temperature and pressure at which the separation process is carried out. Examples of the sweeping component that can be suitably used preferably include inert gases such as Helium, Nitrogen, and more preferably carbon dioxide.

Water from the liquid stream diffuses into the stream of the seeping component, thereby resulting in a gradual separation. The residence time of the sweeping component and/or the mixture of components in the separation unit can vary widely. The residence time for the sweeping component and/or the mixture of components in the separation unit can be in the range from 1 minute to 5 hour.

The separation process may be carried out co-currently, counter- currently or cross-currently. Preferably, counter-current flow of the two streams is used. The separation process can be carried out continuously, semi-batch or batch-wise. Preferably, the separation process is carried out continuously.

Formic acid thus separated preferably is recycled to the cooking step for use in the cooking liquid.

Further, the hydrolysed hemicellulose or sugars and cellulose obtained during the pretreatment process are preferably subjected to further processing to obtain useful chemicals. The sugars may for example be converted into levulinic acid, into lipids, hydrogen, methane, or acetic acid by conversion processes using bacteria and into ethanol by fermentation. Such conversion processes are well-known in the art.

## Claims

1. A process for treating lignocellulosic biomass material comprising the steps of:
(a) contacting the lignocellulosic biomass material with a cooking liquid comprising formic acid and water, to obtain at least one product stream and an aqueous stream comprising a mixture of formic acid and water;
(b) separating water and formic acid from the aqueous stream by evaporation water and formic acid to obtain a gaseous stream comprising water and formic acid; and (c) separating at least part of the water from the formic acid by diffusion of the water out of the gaseous stream through a porous partition into a gaseous stream of a sweeping component, to obtain a retained stream comprising enriched formic acid and a stream comprising water and the sweeping component.

2. The process according to claim 1, wherein the pressure of the gaseous sweep stream is higher than the stream comprising water and formic acid .

3. The process according to claim 1 or 2, wherein the sweeping component comprises an inert gas.

4. The process according to any one of claims 1 to 3, wherein the sweeping component comprises nitrogen.

5. The process according to any one of claims 1 to 4, wherein the sweeping component comprises carbon dioxide.

6. The process according to any one of the preceding claims, wherein the gaseous stream comprising water and formic acid step (c) is maintained at atmospheric conditions.

7. The process according to any one of the preceding claims, wherein the process further comprises separating water from the sweeping component by condensation.

8. The process according to any one of the preceding claims, wherein the step (a) comprises contacting the lignocellulosic biomass material with a cooking liquid comprising formic acid, to obtain a partially decomposed lignocellulosic biomass and washing the partially decomposed lignocellulosic biomass with water to obtain at least one product stream and at least one liquid stream comprising a mixture of formic acid and water.

9. The process according to any one of the preceding claims, wherein the retained formic acid is recycled to step (a).

10. The process according to any one of the preceding claims, wherein the at least one product stream comprises one or more of cellulose, lignin, and hemicellulose.
